# EUROPEAN PATENT APPLICATION

(11) **EP 1 931 007 A2**
(43) Date of publication of application: **11.06.2008**
(21) Application number: 07122220.2
(22) Date of filing: 04.12.2007
(51) Int. Cl.: H02H 3/04

(54) **Remote Power Supply Detector**

(30) Priority: 06.12.2006 IL 17987706
(71) Applicant: Shaked, Avishai, Nahariya (IL)
(72) Inventor: Shaked, Avishai, Nahariya (IL)
(74) Representative: Modiano, Micaela Nadia

(57) **Abstract**

A device that issues a warning in case of power failure, which includes a power failure detector, an automatic dialer, a communications line and an internal power source, whereby in case of power failure, the detector detects the power failure and causes the automatic dialer to transmit a message, via the communications line, to a pre-set recipient, announcing the occurrence of a power failure in the structure.

## Description

### TECHNICAL FIELD

The present invention is a device that detects power failures and automatically transmits a telephone message about the power failure to a pre-set telephone number.

### BACKGROUND ART

Many structures, such as residential buildings, businesses, laboratories, stores, factories and so on, are equipped with instruments and appliances that are powered by electricity that is supplied by the main grid. Such appliances include refrigerators, freezers, laboratory equipment, machinery, installations and so on. Power failures occasionally occur due to short circuits in the electrical system of the structure itself or in the area around the structure In many cases, power failures cause substantial damage to the structure's owners or possessors. Thus, for example, products and food stored in freezers and refrigerators may spoil, animals such as ornamental fish in cages or aquariums may die due to failures in systems that supply them with food or maintain proper aeration and temperature, and so on.

### THE INVENTION

### (Numbers in parentheses refer to numbers in drawing)

The present invention is an effective and inexpensive warning device (1) designed to be connected to a structure's electrical system and telephone line and to inform a pre-set telephone recipient in any case of power failure. The device subject of the invention offers a suitable, effective and inexpensive solution to the above-described problem.

The device (1) comprises a casing (2) that includes an electrical relay contactor (3), an internal power source (4) and an automatic dialer (5). Both external ends (31) of the relay contactor (3) are connected to the structures main electrical system by means of a common electrical cable (7). When the cable (7) is powered, i.e. both ends (31) of the relay contactor have voltage, the relay contactor is in open position and the electrical circuit between the two internal ends (32) is in disconnected position. In case of a power failure, the relay contactor changes position so that the relay contactor is in closed position and the electrical circuit between the ends (32) is closed. One of the relay contactor's (3) internal ends (32) is connected to the automatic dialer (5) and the other is connected to the internal power source (4), which is connected at its other end to the automatic dialer. Thus, an electrical circuit is created When the said electrical circuit is closed, the automatic dialer is activated and dials a pre-set telephone number, leaving a message (voice or other) that informs the recipient of the structure's power failure. Thus, the structure's owner or possessor is made aware of the power failure, and thus can minimize damages and rectify the situation.

The power supply detector can be connected directly to the electrical system, as described above, or by means of a detector or other means capable of detecting power failures. In addition, the automatic dialer can transmit the message by means of the regular telephone line (land line) or cellular telephone line, or by connecting to a computer system such as the internet or, in fact, by any other means of communication. The message can be a pre-recorded voice message, an SMS, a unique ring, and in fact any other pre-set signal.

The power source (4) can be a 6V, 12V or 24V battery or a battery of any other voltage, according to need. The device (1) also includes a keyboard that is used to activate or disconnect the device and to input the emergency telephone numbers dialed by the automatic dialer when transmitting the message about the power failure. A cable (8) connects the automatic dialer to the telephone line. A possible implementation of the invention can include dialing by means of a cellular or wireless line.

The device can include an additional relay contactor and dialer that is activated according to the above-mentioned principle in case power is restored to the structure, so as to inform the recipients that the power failure has ended. This option is intended mainly for cases of brief, initiated zonal power outages.

The device can be implemented in conjunction with another casing containing several relay contactors, each of which is connected to one of the main cut-off switches so that whenever any of the switches trips and disconnects its electrical current, a message is issued. This option is intended mainly for cases in which the socket to which the device is connected is supplying power whereas other part of the structure have been disconnected from the electrical system.

The advantage of the device subject of the invention is the fact that it is an off-the-shelf product with a relatively very low production cost, so that any consumer (who is not a professional) can purchase it and simply and easily install it, unassisted, in the relevant structure.

### DESCRIPTION OF THE DRAWINGS

The drawing attached to the application is not intended to limit the scope of the invention and the possible ways of its application. The drawing is intended only to illustrate the invention and constitutes only one of many possible ways of its application,

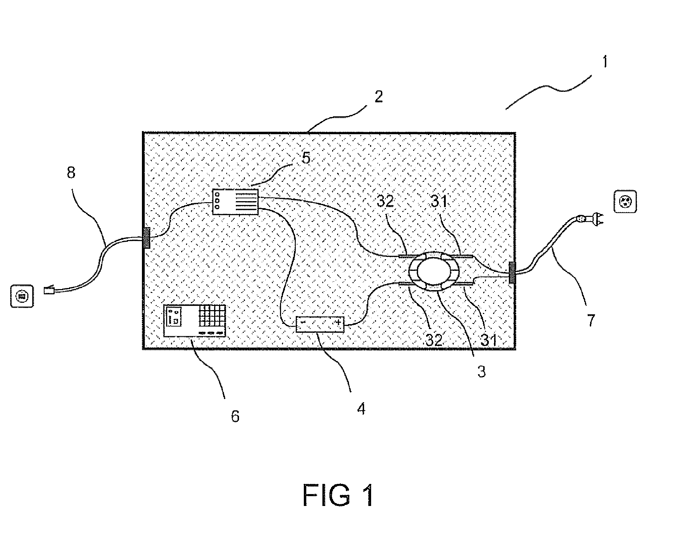

Drawing No. 1: Drawing No. 1 depicts the device (1) assembled in its casing (2), which includes an electrical relay contactor (3), internal power source (4), automatic dialer (5), keyboard (6), cable that connects to the electrical system (7) and a cable that connects to the telephone line (8).

## Claims

1. A device that issues a warning in case of power failure and includes: (a) a power failure detector; (b) an automatic dialer; (c) a communications line; and (d) an internal power source, whereby in case of a power failure, the detector detects the power failure and causes the automatic dialer to transmit a message, via the communications line, to a pre-set recipient, announcing the occurrence of a power failure in the structure.

2. The device described in Claim No. 1, whereby the means of detecting the power failure is an electrical relay contactor.

3. The device described in Claim No. 1, whereby the means of automatic dialing is an automatic dialer.

4. The device described in Claim No. 1, whereby the communications line is a land, cellular or computer network line.
